# EUROPEAN PATENT APPLICATION

(11) **EP 4 289 911 A1**
(43) Date of publication of application: **13.12.2023**
(21) Application number: 21930066.2
(22) Date of filing: 09.03.2021
(51) Int. Cl.: C09D 183/04, C09D 201/00, C09D 201/02, C09D 7/65, F16L 59/02

(54) **METHOD FOR PRODUCING COATING LIQUID AND METHOD FOR PRODUCING THERMAL INSULATION MATERIAL**

(71) Applicant: Resonac Corporation, Tokyo 105-8518 (JP)
(72) Inventor: IZUMI, Hiroyuki, 105-8518 Tokyo (JP); TOGASAKI, Kei, 105-8518 Tokyo (JP); YOKOTA, Hiroshi, 105-8518 Tokyo (JP)
(74) Representative: Berggren Oy
(86) International application number: PCT/JP2021/009289
(87) International publication number: WO 2022/190209

(57) **Abstract**

Provided is a method for producing a coating liquid, the method including: a preparation step of preparing an emulsion containing a polymer-based emulsifier, a binder resin, and a liquid medium, and aerogel particles; and a mixing step of mixing the emulsion and the aerogel particles prepared in the preparation step to agglomerate at least a portion of the aerogel particles, and obtaining a coating liquid containing agglomerates of the aerogel particles, the polymer-based emulsifier, the binder resin, and the liquid medium.

## Description

### Technical Field

The present invention relates to a method for producing a coating liquid and a method for producing a thermal insulation material.

### Background Art

Aerogel is known as a material having excellent thermal insulation properties. Furthermore, methods of processing aerogel into a particulate form and using the particles as a constituent material of a thermal insulation material have been proposed (for example, Patent Literatures 1 and 2). In Patent Literature 1, it has been proposed to use particulate aerogel as a filler between resin plates or the like constituting a heat insulating window. In Patent Literature 2, disclosed is a method of producing a thermal insulation material (molded body) by preparing an aqueous dispersion including aerogel particles and organic fibers, and then press-molding an intermediate product obtained by evaporating water.

### Citation List

### Patent Literature

Patent Literature 1: Japanese Unexamined Patent Publication No. 2012-91943
Patent Literature 2: Japanese Unexamined Patent Publication No. 2014-35044

### Summary of Invention

### Technical Problem

A composite material in which aerogel particles are dispersed in a resin component is expected to have excellent heat resistance. However, when such a composite material is produced into a coating liquid, there are problems that the resin component infiltrates into the pores of the aerogel particles, resulting in the loss of the porous structure, and the thermal insulation properties are deteriorated, and that sufficient strength of a coating film is not obtained, and cracks are likely to be generated.

Thus, it is an object of the present invention to provide a method for producing a thermal insulation material, the method making it possible to obtain a thermal insulation material in which infiltration of a resin component into pores of aerogel particles is suppressed and which has high thermal insulation properties and high film-forming properties. Furthermore, it is another object of the present invention to provide a coating liquid for forming the above-described thermal insulation material, and a method for producing the coating liquid.

### Solution to Problem

An aspect of the present invention relates to a method for producing a coating liquid, the method including: a preparation step of preparing an emulsion containing a polymer-based emulsifier, a binder resin, and a liquid medium, and aerogel particles; and a mixing step of mixing the emulsion and the aerogel particles prepared in the preparation step to agglomerate at least a portion of the aerogel particles, and obtaining a coating liquid containing agglomerates of the aerogel particles, the polymer-based emulsifier, the binder resin, and the liquid medium.

In a coating liquid obtainable by the above-described production method, the contact interface between the aerogel particles and the resin component is decreased due to agglomeration of the aerogel particles, and infiltration of the resin component into the pores of the aerogel particles is suppressed. Furthermore, since the coating liquid obtainable by the above-described production method is not obtained by blending agglomerates of the aerogel particles that have been prepared in advance but is obtained by causing the aerogel particles to agglomerate at the time of mixing with other components, the aerogel particles and agglomerates thereof are uniformly dispersed, and non-uniformization, cracking, and the like of the coating film due to uneven distribution of the aerogel particles can be suppressed. Furthermore, in the above-described production method, since a binder resin that has been emulsified in advance with a polymer-based emulsifier is mixed, infiltration of the resin component into the pores of the aerogel particles is further suppressed. For this reason, according to a coating liquid obtainable by the above-described production method, a thermal insulation material having high thermal insulation properties and high film-forming properties is obtained.

Furthermore, in the above-described production method, since the binder resin in the emulsion is covered with a polymer-based emulsifier due to the use of the polymer-based emulsifier, fine particles of the binder resin and the agglomerates of the aerogel particles are less likely to come into contact, the binder resin is less likely to penetrate into the gaps inside the agglomerates of the aerogel particles, and agglomerates of the aerogel particles are less likely to disintegrate. Therefore, a coating film obtainable by the above-described production method is such that the agglomerates of the aerogel particles are likely to be maintained without being disintegrated even when a certain extent of pressure is applied during application, and for example, a coating method requiring high pressure, such as airless spray, can be suitably used.

According to an embodiment, an average diameter of the agglomerates may be 2 to 40 times an average diameter of the aerogel particles prepared in the preparation step. By forming such agglomerates, the above-mentioned effects are provided more remarkably.

According to an embodiment, when a diluted solution obtained by diluting the coating liquid is observed by using an optical microscope, an area occupied by the agglomerates having a diameter of 20 µm or more may be 50% or more of an area occupied by the aerogel particles and the agglomerates within a visual field of observation. As a result, the above-mentioned effects are provided more remarkably.

According to an embodiment, a total content of the aerogel particles and the agglomerates in the coating liquid may be 70% by volume or more based on a total volume of a solid content. As a result, a thermal insulation material having more excellent thermal insulation properties can be formed.

According to an embodiment, the mixing step may be a step of further mixing a water-soluble polymer having a hydrophobic group, and the coating liquid may further contain the water-soluble polymer. As a result, the dispersibility of the aerogel particles is further improved, and a coating liquid in which aerogel particles and agglomerates thereof are uniformly dispersed even when the filling ratio of the aerogel particles is increased is more likely to be obtained.

Another aspect of the present invention relates to a method for producing a thermal insulation material, the method including a coating step of applying a coating liquid produced by the above-described production method on a support to obtain a coating film; and a removal step of removing at least a portion of the liquid medium from the coating film to obtain a thermal insulation material. According to such a production method, a thermal insulation material in which infiltration of a resin component into pores of aerogel particles is suppressed and which has high thermal insulation properties and high film-forming properties can be easily obtained.

According to an embodiment, the thermal insulation material may have a pore volume of 0.15 cm³/g or more.

According to an embodiment, the coating step may be a step of applying the coating liquid by a coating method in which a pressure applied to the coating liquid is more than 1.5 MPa.

Still another aspect of the present invention relates to a coating liquid containing agglomerates of aerogel particles, a polymer-based emulsifier, a binder resin, and a liquid medium, in which when a diluted solution obtained by diluting the coating liquid is observed by using an optical microscope, in an area occupied by the aerogel particles and the agglomerates within a visual field of observation, an area occupied by the agglomerates having a diameter of 20 µm or more is 50% or more.

### Advantageous Effects of Invention

According to the present invention, there is provided a method for producing a thermal insulation material, the method making it possible to obtain a thermal insulation material in which infiltration of a resin component into pores of aerogel particles is suppressed and which has high thermal insulation properties and high film-forming properties. Furthermore, according to the present invention, a coating liquid for forming the thermal insulation material and a method for producing the coating liquid are provided.

### Description of Embodiments

Suitable embodiments of the present invention will be described in detail below. However, the present invention is not intended to be limited to the following embodiments. According to the present specification, a numerical value range indicated by using the term "to" represents a range including the numerical values described before and after the term "to" as the minimum value and the maximum value, respectively. The phrase "A or B" may include either one of A and B or may include both of them. Regarding a material listed as an example in the present embodiment, unless particularly stated otherwise, one kind thereof can be used alone, or two or more kinds thereof can be used in combination.

A method for producing a coating liquid according to the present embodiment includes: a preparation step of preparing an emulsion containing a polymer-based emulsifier, a binder resin, and a liquid medium, and aerogel particles; and a mixing step of mixing the emulsion and aerogel particles prepared in the preparation step to cause at least a portion of the aerogel particles to agglomerate, and obtaining a coating liquid containing agglomerates of the aerogel particles, the polymer-based emulsifier, the binder resin, and the liquid medium.

In the coating liquid obtainable by the production method of the present embodiment, the contact interface between the aerogel particles and the resin component becomes small due to agglomeration of the aerogel particles, and infiltration of the resin component into the pores of the aerogel particles is suppressed. Incidentally, it is also conceivable to prepare agglomerates of the aerogel particles in advance in order to reduce the contact interface; however, in this case, it is difficult to disperse the agglomerates in the coating liquid, and there is a risk that agglomerates may be disintegrated due to a stirring operation for dispersion or the like. In the present embodiment, when the aerogel particles are caused to agglomerate at the time of mixing with other components, the aerogel particles and agglomerates thereof are uniformly dispersed, and non-uniformization, cracking, and the like of the coating film due to uneven distribution of the aerogel particles are suppressed. Furthermore, in the present embodiment, since a binder resin emulsified in advance with a polymer-based emulsifier is mixed, infiltration of the resin component into the pores of the aerogel particles is further suppressed. For this reason, according to the production method of the present embodiment, a coating liquid capable of forming a thermal insulation material having high thermal insulation properties and high film-forming properties can be obtained.

Furthermore, in the production method of the present embodiment, since the binder resin in the emulsion is covered with a polymer-based emulsifier due to the use of the polymer-based emulsifier, fine particles of the binder resin and agglomerates of the aerogel particles are less likely to come into contact, the binder resin is less likely to penetrate into the gaps within the agglomerates of the aerogel particles, and the agglomerates of the aerogel particles are less likely to be disintegrated. Therefore, in a coating film obtainable by the production method of the present embodiment, even when a certain pressure is applied during application, agglomerates of the aerogel particles are likely to be maintained without being disintegrated, and for example, a coating method requiring high pressure, such as airless spray, can be suitably used.

The method for producing a thermal insulation material of the present embodiment includes a coating step of applying a coating liquid produced by the above-described method on a support to obtain a coating film; and a removal step of removing at least a portion of the liquid medium from the coating film to obtain a thermal insulation material. The method for producing a thermal insulation material of the present embodiment may further include a coating liquid production step of obtaining a coating liquid by the above-described method.

According to the production method of the present embodiment, a thermal insulation material in which infiltration of the resin component into the pores of the aerogel particles is suppressed and which has high thermal insulation properties and high film-forming properties can be easily obtained.

### <Aerogel>

In a narrow sense, a dry gel obtained by using a supercritical drying method on a wet gel is referred to as aerogel, a dry gel obtained by drying under atmospheric pressure is referred to as xerogel, and a dry gel obtained by freeze-drying is referred to as cryogel; however, in the present embodiment, a low-density dry gel obtained regardless of these drying techniques for wet gel is referred to as "aerogel". That is, according to the present embodiment, the term "aerogel" means a "Gel comprised of a microporous solid in which the dispersed phase is a gas", which is an aerogel in a broad sense. Generally, the inner part of the aerogel has a network-shaped microstructure and has a cluster structure in which particulate aerogel components having a size of about 2 to 20 nm are bonded. Between the frameworks formed by these clusters, there are pores having a size of less than 100 nm. As a result, a three-dimensionally fine porous structure is formed in the aerogel.

The aerogel according to the present embodiment is, for example, a silica aerogel containing silica as a main component. An example of the silica aerogel may be a so-called organic-inorganic hybridized silica aerogel into which an organic group (methyl group or the like) or an organic chain is introduced.

Regarding the aerogel according to the present embodiment, for example, the following embodiments may be mentioned. When these embodiments are employed, it is easier to obtain an aerogel having excellent thermal insulation properties, flame retardancy, heat resistance, and flexibility. When each of the embodiments is employed, an aerogel having thermal insulation properties, flame retardancy, heat resistance, and flexibility according to each of the embodiments can be obtained.

### (First embodiment)

An aerogel according to the present embodiment can have a structure represented by the following General Formula (1). The aerogel according to the present embodiment can have a structure represented by the following General Formula (1a) as a structure including the structure represented by Formula (1).

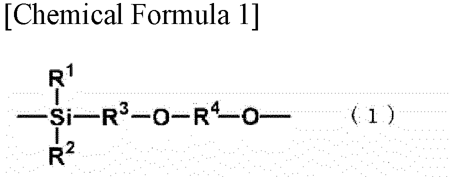

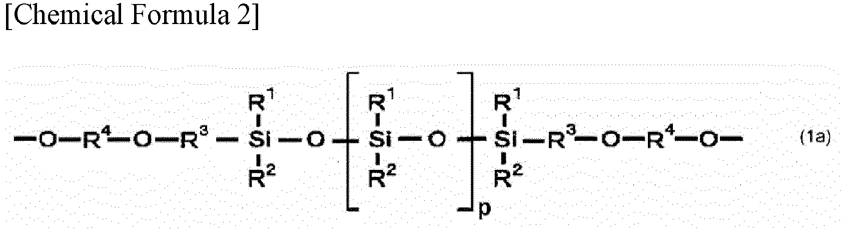

In Formula (1) and Formula (1a), R¹ and R² each independently represent an alkyl group or an aryl group; and R³ and R⁴ each independently represent an alkylene group. Here, examples of the aryl group include a phenyl group and a substituted phenyl group. Incidentally, examples of a substituent for the substituted phenyl group include an alkyl group, a vinyl group, a mercapto group, an amino group, a nitro group, and a cyano group. p represents an integer of 1 to 50. In Formula (1a), two or more R¹'s may be identical with or different from each other, and similarly, two or more R²'s may be identical with or different from each other. In Formula (1a), two R³'s may be identical with or different from each other, and similarly, two R⁴'s may be identical with or different from each other.

By introducing the structure represented by Formula (1) or Formula (1a) as an aerogel component into the skeleton of the aerogel, a flexible aerogel with a low thermal conductivity is obtained. From such a viewpoint, R¹ and R² in Formula (1) and Formula (1a) each independently represent an alkyl group having 1 to 6 carbon atoms, a phenyl group, or the like, and examples of the alkyl group include a methyl group. Furthermore, R³ and R⁴ in Formula (1) and Formula (1a) each independently represent an alkylene group having 1 to 6 carbon atoms or the like, and examples of the alkylene group include an ethylene group and a propylene group. In Formula (1a), p can be set to 2 to 30 or may be 5 to 20.

### (Second embodiment)

The aerogel according to the present embodiment has a ladder type structure including struts and bridges, and the bridges can have a structure represented by the following General Formula (2). When such a ladder type structure is introduced into the skeleton of aerogel as an aerogel component, heat resistance and mechanical strength can be improved. Incidentally, the "ladder type structure" according to the present embodiment has two struts and bridges connecting the struts (having a so-called "ladder" form). According to the present embodiment, the skeleton of the aerogel may be composed of a ladder type structure; however, the aerogel may partially have the ladder type structure.

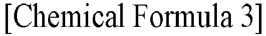

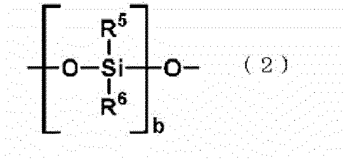

In Formula (2), R⁵ and R⁶ each independently represent an alkyl group or an aryl group; and b represents an integer of 1 to 50. Here, examples of the aryl group include a phenyl group and a substituted phenyl group. Furthermore, examples of a substituent of the substituted phenyl group include an alkyl group, a vinyl group, a mercapto group, an amino group, a nitro group, and a cyano group. Incidentally, in Formula (2), when b is an integer of 2 or greater, two or more R⁵'s may be identical with or different from each other, and similarly, two or more R⁶'s may also be identical with or different from each other.

By introducing the above-described structure into the skeleton of aerogel as an aerogel component, for example, an aerogel having more excellent flexibility than conventional aerogels having a structure derived from a ladder type silsesquioxane (that is, having a structure represented by the following General Formula (X)) is obtained. Silsesquioxanes are polysiloxanes having a composition formula: (RSiO_{1.5})ₙ and can have various skeletal structures such as a cage type, a ladder type, and a random type. Incidentally, as shown in the following General Formula (X), in conventional aerogels having a structure derived from a ladder type silsesquioxane, the structure of the bridges is -O-; however, in the aerogel according to the present embodiment, the structure of the bridges is the above-described structure represented by General Formula (2) (polysiloxane structure). However, the aerogel of the present embodiment may further have a structure derived from a silsesquioxane in addition to the structure represented by General Formula (2).

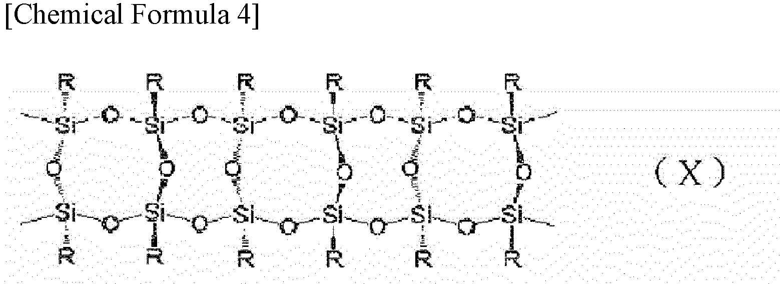

In Formula (X), R represents a hydroxy group, an alkyl group, or an aryl group.

The structures serving as struts and the chain length thereof, and the interval of the structures serving as bridges are not particularly limited; however, from the viewpoint of further improving heat resistance and mechanical strength, the ladder type structure may have a ladder type structure represented by the following General Formula (3).

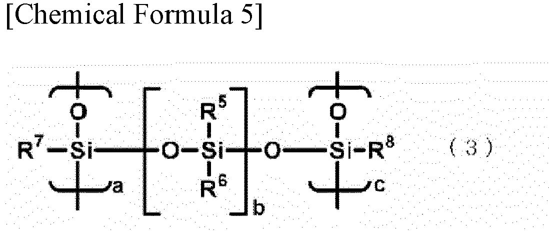

In Formula (3), R⁵, R⁶, R⁷, and R⁸ each independently represent an alkyl group or an aryl group; a and c each independently represent an integer of 1 to 3000; and b represents an integer of 1 to 50. Here, examples of the aryl group include a phenyl group and a substituted phenyl group. Furthermore, examples of a substituent of the substituted phenyl group include an alkyl group, a vinyl group, a mercapto group, an amino group, a nitro group, and a cyano group. Incidentally, in Formula (3), when b is an integer of 2 or greater, two or more R⁵'s may be identical with or different from each other, and similarly, two or more R⁶'s may also be identical with or different from each other. Furthermore, in Formula (3), when a is an integer of 2 or greater, two or more R⁷'s may be identical with or different from each other, and similarly, when c is an integer of 2 or greater, two or more R⁸'s may be identical with or different from each other.

Incidentally, from the viewpoint of obtaining more excellent flexibility, in Formulas (2) and (3), R⁵, R⁶, R⁷, and R⁸ (provided that R⁷ and R⁸ are only in Formula (3)) each independently represents an alkyl group having 1 to 6 carbon atoms, a phenyl group, or the like, and examples of the alkyl group include a methyl group. Furthermore, in Formula (3), a and c can be each independently set to 6 to 2000 or may be 10 to 1000. Furthermore, in Formulas (2) and (3), b can be set to 2 to 30 or may be 5 to 20.

### (Third embodiment)

The aerogel according to the present embodiment may be a dried product of a wet gel (product obtainable by drying a wet gel produced from a sol), which is a condensate of a sol containing at least one selected from the group consisting of a silicon compound having a hydrolysable functional group or a condensable functional group, and a hydrolysis product of a silicon compound having a hydrolysable functional group. Incidentally, the aerogels described so far may also be aerogels obtained in this way by drying a wet gel produced from a sol containing a silicon compound and the like.

As the silicon compound having a hydrolysable functional group or a condensable functional group, a polysiloxane compound can be used. That is, the above-described sol can contain at least one compound selected from the group consisting of a polysiloxane compound having a hydrolysable functional group or a condensable functional group, and a hydrolysis product of a polysiloxane compound having a hydrolysable functional group (hereinafter, optionally referred to as "polysiloxane compound group").

The functional group for the polysiloxane compound is not particularly limited; however, the functional group can be a group capable of reacting with the same functional group or a group capable of reacting with another functional group. Examples of the hydrolysable functional group include an alkoxy group. Examples of the condensable functional group include a hydroxyl group, a silanol group, a carboxyl group, and a phenolic hydroxyl group. The hydroxyl group may be included as a hydroxyl group-containing group such as a hydroxyalkyl group. Incidentally, a polysiloxane compound having a hydrolysable functional group or a condensable functional group may further have another reactive group different from a hydrolysable functional group and a condensable functional group (functional group not corresponding to the hydrolysable functional group and the condensable functional group). Examples of the reactive group include an epoxy group, a mercapto group, a glycidoxy group, a vinyl group, an acryloyl group, a methacryloyl group, and an amino group. The epoxy group may be included as an epoxy group-containing group such as a glycidoxy group. Polysiloxane compounds having these functional groups and reactive groups may be used singly or as mixtures of two or more kinds thereof. Among these functional groups and reactive groups, examples of a group improving the flexibility of the aerogel include an alkoxy group, a silanol group, and a hydroxyalkyl group, and among these, an alkoxy group and a hydroxyalkyl group can further improve the compatibility of the sol. Furthermore, from the viewpoint of improving the reactivity of the polysiloxane compound and reducing the thermal conductivity of the aerogel, the number of carbon atoms of the alkoxy group and the hydroxyalkyl group can be set to 1 to 6; however, from the viewpoint of further improving the flexibility of the aerogel, the number of carbon atoms may be 2 to 5 or may be 2 to 4.

Regarding a polysiloxane compound having a hydroxyalkyl group in the molecule, a polysiloxane compound having a structure represented by the following General Formula (A) may be mentioned. By using a polysiloxane compound having a structure represented by the following General Formula (A), structures represented by General Formula (1) and Formula (1a) can be introduced into the skeleton of the aerogel.

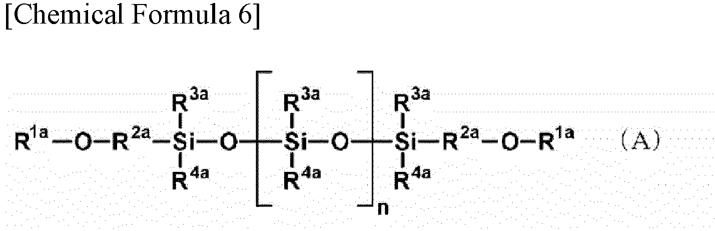

In Formula (A), R^{1a} represents a hydroxyalkyl group; R^{2a} represents an alkylene group; R^{3a} and R^{4a} each independently represent an alkyl group or an aryl group; and n represents an integer of 1 to 50. Here, examples of the aryl group include a phenyl group and a substituted phenyl group. Furthermore, examples of a substituent of the substituted phenyl group include an alkyl group, a vinyl group, a mercapto group, an amino group, a nitro group, and a cyano group. Incidentally, in Formula (A), two R^{1a}'s may be identical with or different from each other, and similarly, two R^{2a}'s may be identical with or different from each other. Furthermore, in Formula (A), two or more R^{3a}'s may be identical with or different from each other, and similarly, two or more R^{4a}'s may be identical with or different from each other.

By using a wet gel which is a condensate of a sol (produced from a sol) containing a polysiloxane compound having the above-described structure, a flexible aerogel having a low thermal conductivity is more easily obtained. From such a viewpoint, in Formula (A), R^{1a} may be a hydroxyalkyl group having 1 to 6 carbon atoms or the like, and examples of the hydroxyalkyl group include a hydroxyethyl group and a hydroxypropyl group. Furthermore, in Formula (A), R^{2a} may be an alkylene group having 1 to 6 carbon atoms or the like, and examples of the alkylene group include an ethylene group and a propylene group. Furthermore, in Formula (A), R^{3a} and R^{4a} may be each independently an alkyl group having 1 to 6 carbon atoms, a phenyl group, or the like, and examples of the alkyl group include a methyl group. Furthermore, in Formula (A), n can be set to 2 to 30 or may be 5 to 20.

As the polysiloxane compound having a structure represented by General Formula (A), a commercially available product can be used, and examples include compounds such as X-22-160AS, KF-6001, KF-6002, and KF-6003 (all manufactured by Shin-Etsu Chemical Co., Ltd.); and compounds such as XF42-B0970 and Fluid OFOH 702-4% (all manufactured by Momentive Performance Materials, Inc.).

As a polysiloxane compound having an alkoxy group in the molecule, a polysiloxane compound having a structure represented by the following General Formula (B) may be mentioned. By using a polysiloxane compound having a structure represented by the following General Formula (B), a ladder type structure having bridges represented by General Formula (2) or (3) can be introduced into the skeleton of the aerogel.

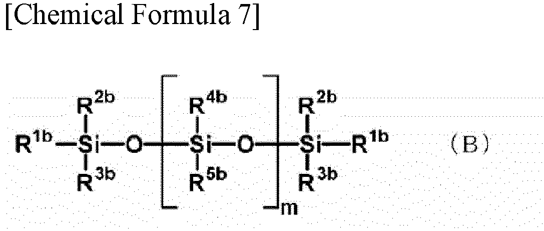

In Formula (B), R^{1b} represents an alkyl group, an alkoxy group, or an aryl group; R^{2b} and R^{3b} each independently represent an alkoxy group; R^{4b} and R^{5b} each independently represent an alkyl group or an aryl group; and m represents an integer of 1 to 50. Here, examples of the aryl group include a phenyl group and a substituted phenyl group. Furthermore, examples of a substituent of the substituted phenyl group include an alkyl group, a vinyl group, a mercapto group, an amino group, a nitro group, and a cyano group. Incidentally, in Formula (B), two R^{1b}'s may be identical with or different from each other, two R^{2b}'s may be identical with or different from each other, and similarly, two R^{3b}'s may be identical with or different from each other. Furthermore, in Formula (B), when m is an integer of 2 or greater, two or more R^{4b}'s may be identical with or different from each other, and similarly, two or more R^{5b}'s may also be identical with or different from each other.

By using a wet gel which is a condensate of a sol (produced from a sol) containing a polysiloxane compound having the above-described structure or a hydrolysis product thereof, a flexible aerogel having a low thermal conductivity is more easily obtained. From such a viewpoint, R^{1b} in Formula (B) may be an alkyl group having 1 to 6 carbon atoms, an alkoxy group having 1 to 6 carbon atoms, or the like, and examples of the alkyl group or alkoxy group include a methyl group, a methoxy group, and an ethoxy group. Furthermore, in Formula (B), R^{2b} and R^{3b} may be each independently an alkoxy group having 1 to 6 carbon atoms or the like, and examples of the alkoxy group include a methoxy group and an ethoxy group. Furthermore, in Formula (B), R^{4b} and R^{5b} may be each independently an alkyl group having 1 to 6 carbon atoms, a phenyl group, or the like, and examples of the alkyl group include a methyl group. Furthermore, in Formula (B), m can be set to 2 to 30; however, m may be 3 to 35 or may be 5 to 20.

The polysiloxane compound having a structure represented by General Formula (B) can be obtained by appropriately referring to the production methods reported in Japanese Unexamined Patent Publication No. 2000-26609, Japanese Unexamined Patent Publication No. 2012-233110, and the like. Furthermore, as the polysiloxane compound, XR31-B1410 (manufactured by Momentive Performance Materials, Inc.) may be used.

Incidentally, since an alkoxy group is hydrolysable, there is a possibility that a polysiloxane compound having an alkoxy group may exist as a hydrolysis product in a sol, and the polysiloxane compound having an alkoxy group and a hydrolysis product thereof may be co-present. Furthermore, with regard to the polysiloxane compound having an alkoxy group, the alkoxy groups in the molecules may be fully hydrolyzed or may be partially hydrolyzed.

These polysiloxane compound having a hydrolysable functional group or a condensable functional group and a hydrolysis product of a polysiloxane compound having a hydrolysable functional group may be used singly, or two or more kinds thereof may be used as a mixture.

On the occasion of producing an aerogel according to the present embodiment, a silicon compound other than the above-mentioned polysiloxane compound can be used as the silicon compound having a hydrolysable functional group or a condensable functional group. That is, a sol containing the above-described silicon compound can contain at least one selected from the group consisting of a silicon compound having a hydrolysable functional group or a condensable functional group (excluding a polysiloxane compound) and a hydrolysis product of the silicon compound having a hydrolysable functional group (hereinafter, optionally referred to as "silicon compound group"), in addition to the above-mentioned polysiloxane compound group or instead of the above-mentioned polysiloxane compound group. The number of silicon atoms in the molecule of the silicon compound can be set to 1 or 2.

The silicon compound having a hydrolysable functional group in the molecule is not particularly limited; however, examples include an alkyl silicon alkoxide. In the alkyl silicon alkoxide, from the viewpoint of improving water resistance, the number of hydrolysable functional groups can be set to 3 or less. Examples of such an alkyl silicon alkoxide include a monoalkyltrialkoxysilane, a monoalkyldialkoxysilane, a dialkyldialkoxysilane, a monoalkylmonoalkoxysilane, a dialkylmonoalkoxysilane, and a trialkylmonoalkoxysilane, and specific examples include methyltrimethoxysilane, methyldimethoxysilane, dimethyldiethoxysilane, dimethyldimethoxysilane, ethyltrimethoxysilane, and hexyltrimethoxysilane. Here, examples of the hydrolysable functional group include alkoxy groups such as a methoxy group and an ethoxy group.

The silicon compound having a condensable functional group is not particularly limited; however, examples thereof include silanetetraol, methylsilanetriol, dimethylsilanediol, phenylsilanetriol, phenylmethylsilanediol, diphenylsilanediol, n-propylsilanetriol, hexylsilanetriol, octylsilanetriol, decylsilanetriol, and trifluoropropylsilanetriol.

The silicon compound having a hydrolysable functional group or a condensable functional group may further have an above-mentioned reactive group different from the hydrolysable functional group and a condensable functional group (a functional group not corresponding to a hydrolysable functional group and a condensable functional group).

As silicon compounds having three or fewer hydrolysable functional groups and having a reactive group, vinyltrimethoxysilane, 3-glycidoxypropyltrimethoxysilane, 3-glycidoxypropylmethyldimethoxysilane, 3-methacryloxypropyltrimethoxysilane, 3-methacryloxypropylmethyldimethoxysilane, 3-acryloxypropyltrimethoxysilane, 3-mercaptopropyltrimethoxysilane, 3-mercaptopropylmethyldimethoxysilane, N-phenyl-3-aminopropyltrimethoxysilane, N-2-(aminoethyl)-3-aminopropylmethyldimethoxysilane, and the like can also be used.

Furthermore, as silicon compounds having a condensable functional group and having a reactive group, vinylsilanetriol, 3-glycidoxypropylsilanetriol, 3-glycidoxypropylmethylsilanediol, 3-methacryloxypropylsilanetriol, 3-methacryloxypropylmethylsilanediol, 3-acryloxypropylsilanetriol, 3-mercaptopropylsilanetriol, 3-mercaptopropylmethylsilanediol, N-phenyl-3-aminopropylsilanetriol, N-2-(aminoethyl)-3-aminopropylmethylsilanediol, and the like can also be used.

In addition, bistrimethoxysilylmethane, bistrimethoxysilylethane, bistrimethoxysilylhexane, ethyltrimethoxysilane, vinyltrimethoxysilane, and the like, which are silicon compounds having three or fewer hydrolysable functional groups at the molecular terminals, can also be used.

The silicon compound having a hydrolysable functional group or a condensable functional group (excluding a polysiloxane compound) and a hydrolysis product of the silicon compound having a hydrolysable functional group may be used singly or as a mixture of two or more kinds thereof.

By using the above-described silicon compound (excluding a polysiloxane compound), structures represented by the following General Formulas (4) to (6) can be introduced into the skeleton of the aerogel. The aerogel according to the present embodiment can have any one of these structures alone or can have two or more kinds thereof.

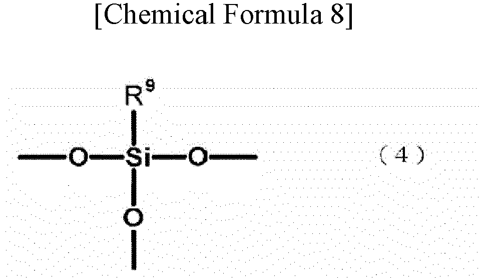

In Formula (4), R⁹ represents an alkyl group. Here, as the alkyl group, an alkyl group having 1 to 6 carbon atoms or the like may be mentioned, and examples of the alkyl group include a methyl group.

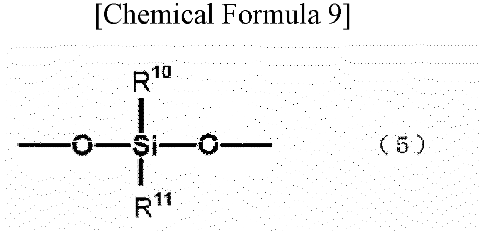

In Formula (5), R¹⁰ and R¹¹ each independently represent an alkyl group. Here, as the alkyl group, an alkyl group having 1 to 6 carbon atoms or the like may be mentioned, and examples of the alkyl group include a methyl group.

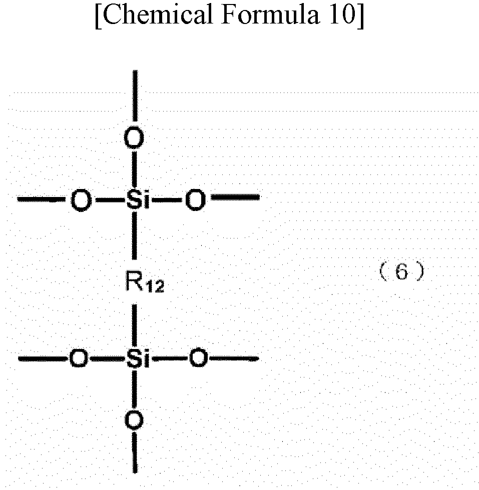

In Formula (6), R¹² represents an alkylene group. Here, as the alkylene group, an alkylene group having 1 to 10 carbon atoms or the like may be mentioned, and examples of the alkylene group include an ethylene group and a hexylene group.

### (Fourth embodiment)

The aerogel according to the present embodiment may further contain silica particles in addition to the aerogel component, from the viewpoint of further toughening the aerogel and from the viewpoint of achieving more excellent thermal insulation properties and flexibility. An aerogel containing an aerogel component and silica particles may be referred to as an aerogel composite. It may be considered that an aerogel composite has an aerogel component and silica particles compositized therein, has a cluster structure, which is a feature of aerogel, and has a three-dimensionally fine porous structure.

An aerogel containing an aerogel component and silica particles can be regarded as a dried product of a wet gel, which is a condensate of a sol containing at least one selected from the group consisting of a silicon compound having a hydrolysable functional group or a condensable functional group, and a hydrolysis product of a silicon compound having a hydrolysable functional group as described above and containing silica particles. Therefore, the descriptions related to the first embodiment to the third embodiment can also be appropriately applied to the aerogel according to the present embodiment.

Silica particles can be used without particular limitation, and amorphous silica particles and the like may be mentioned. Examples of the amorphous silica particles include fused silica particles, fumed silica particles, and colloidal silica particles. Among these, colloidal silica particles have high monodispersity, and agglomeration thereof in the sol is easily suppressed. Incidentally, the silica particles may be silica particles having a hollow structure, a porous structure, or the like.

The shape of the silica particles is not particularly limited, and examples include a spherical shape, a cocoon type, and an association type. Among these, when spherical-shaped particles are used as the silica particles, agglomeration in the sol is easily suppressed. The average primary particle size of the silica particles may be 1 nm or more, may be 5 nm or more, or may be 20 nm or more, from the viewpoint that it is easy to impart appropriate strength and flexibility to the aerogel, and an aerogel having excellent shrinkage resistance during drying is likely to be obtained. The average primary particle size of the silica particles may be 500 nm or less, may be 300 nm or less, or may be 100 nm or less, from the viewpoint that the solid thermal conduction of silica particles is easily suppressed, and an aerogel having excellent thermal insulation properties is likely to be obtained. From these viewpoints, the average primary particle size of the silica particles may be 1 to 500 nm, may be 5 to 300 nm, or may be 20 to 100 nm.

According to the present embodiment, the average particle size of the aerogel component and the average primary particle size of the silica particles can be obtained by observing the aerogel directly by using a scanning electron microscope (hereinafter, abbreviated to "SEM"). The term "diameter" as used herein means the diameter when a cross-section of a particle exposed at a cross-section of the aerogel is regarded as a circle. Furthermore, the "diameter when a cross-section is regarded as a circle" is the diameter of a perfect circle when the area of the cross-section is replaced with a perfect circle having the same area. Incidentally, for the calculation of the average particle size, the diameters of circles are determined for one hundred particles, and an average thereof is taken.

Incidentally, the average particle size of the silica particles can also be measured from the raw material. For example, the biaxial average primary particle size is calculated as follows from the results obtained by observing any twenty particles by SEM. That is, when taking colloidal silica particles dispersed in water usually at a solid content concentration of about 5% to 40% by mass as an example, a chip obtained by cutting a wafer with patterned wiring into a size of 2 cm on each of four sides is immersed in a dispersion liquid of colloidal silica particles for about 30 seconds, and then the chip is rinsed with pure water for about 30 seconds and dried by blowing nitrogen. Thereafter, the chip is placed on a sample table for SEM observation, an accelerating voltage of 10 kV is applied thereto, the silica particles are observed at a magnification of 100000 times, and images are captured. Twenty silica particles are arbitrarily selected from the obtained images, and the average of the particle sizes of those particles is taken as the average particle size.

The number of silanol groups per 1 g of the silica particles may be 10×10¹⁸ groups/g or more, may be 50×10¹⁸ groups/g or more, or may be 100×10¹⁸ groups/g or more, from the viewpoint that an aerogel having excellent shrinkage resistance is likely to be obtained. The number of silanol groups per 1 g of the silica particles may be 1000×10¹⁸ groups/g or less, may be 800×10¹⁸ groups/g or less, or may be 700×10¹⁸ groups/g or less, from the viewpoint that a homogeneous aerogel is likely to be obtained. From these viewpoints, the number of silanol groups per 1 g of the silica particles may be 10×10¹⁸ to 1000×10¹⁸ groups/g, may be 50×10¹⁸ to 800×10¹⁸ groups/g, or may be 100×10¹⁸ to 700×10¹⁸ groups/g.

The content of the polysiloxane compound group (sum total of the content of a polysiloxane compound having a hydrolysable functional group or a condensable functional group and the content of a hydrolysis product of a polysiloxane compound having a hydrolysable functional group) included in the above-described sol may be 5 parts by mass or more or may be 10 parts by mass or more, with respect to 100 parts by mass of the total amount of the sol, from the viewpoint that satisfactory reactivity is more likely to be obtained. The content of the polysiloxane compound group included in the sol may be 50 parts by mass or less or may be 30 parts by mass or less, with respect to 100 parts by mass of the total amount of the sol, from the viewpoint that satisfactory compatibility is more likely to be obtained. From these viewpoints, the content of the polysiloxane compound group included in the sol may be 5 to 50 parts by mass or may be 10 to 30 parts by mass with respect to 100 parts by mass of the total amount of the sol.

When the sol contains a silicon compound (excluding a polysiloxane compound), the silicon compound group (sum total of the content of a silicon compound having a hydrolysable functional group or a condensable functional group and the content of a hydrolysis product of a silicon compound having a hydrolysable functional group) may be 5 parts by mass or more, may be 7 parts by mass or more, or may be 10 parts by mass or more, with respect to 100 parts by mass of the total amount of the sol, from the viewpoint that satisfactory reactivity is more likely to be obtained. The content of the silicon compound group included in the sol may be 50 parts by mass or less, may be 40 parts by mass or less, or may be 30 parts by mass or less, with respect to 100 parts by mass of the total amount of the sol, from the viewpoint that satisfactory compatibility is more likely to be obtained.

When the sol includes both the polysiloxane compound group and the silicon compound group, the ratio between the content of the polysiloxane compound group and the content of the silicon compound group may be 1 : 0.5 or more, may be 1 : 0.7 or more, or may be 1 : 1 or more, from the viewpoint that satisfactory compatibility is more likely to be obtained. The ratio between the content of the polysiloxane compound group and the content of the silicon compound group may be 1 : 4 or less, may be 1 : 3 or less, or may be 1 : 2 or less, from the viewpoint that shrinkage of the gel is more easily suppressed. From these viewpoints, the ratio between the content of the polysiloxane compound group and the content of the silicon compound group may be 1 : 0.5 to 1 : 4, may be 1 : 0.7 to 1 : 3, or may be 1 : 1 to 1 : 2.

When silica particles are included in the sol, from the viewpoint that moderate strength is likely to be imparted to the aerogel, and an aerogel having excellent shrinkage resistance during drying is likely to be obtained, the content of the silica particles may be 1 part by mass or more, may be 2 parts by mass or more, or may be 4 parts by mass or more, with respect to 100 parts by mass of the total amount of the sol. From the viewpoint that solid thermal conduction of the silica particles is easily suppressed, and an aerogel having excellent thermal insulation properties is likely to be obtained, the content of the silica particles may be 20 parts by mass or less, may be 17 parts by mass or less, or may be 15 parts by mass or less, with respect to 100 parts by mass of the total amount of the sol. From these viewpoints, the content of the silica particles may be 1 to 20 parts by mass, may be 2 to 17 parts by mass, or may be 4 to 15 parts by mass, with respect to 100 parts by mass of the total amount of the sol.

### <Aerogel particles>

The aerogel particles according to the present embodiment can be obtained by, for example, pulverizing bulk aerogel as will be described below.

The average particle size D50 (also referred to as average diameter) of the aerogel particles can be set to 0.1 to 1000 µm; however, the average particle size may be 0.5 to 700 µm, may be 1 to 500 µm, may be 3 to 100 µm, or may be 5 to 50 µm. When the average particle size D50 of the aerogel particles is large, aerogel particles having excellent dispersibility, handleability, and the like are likely to be obtained. On the other hand, when the average particle size D50 is small, aerogel particles having excellent dispersibility are likely to be obtained. The average particle size of the aerogel particles can be appropriately adjusted by the pulverization method and the conditions for pulverization, and the methods of sieving, classification, and the like.

The average particle size D50 of the aerogel particles can be measured by a laser diffraction scattering method. For example, aerogel particles are added to a solvent (ethanol) so as to obtain a content of the aerogel of 0.05% to 5% by mass, and dispersion of the aerogel particles is performed by vibrating the mixture for 15 to 30 minutes with a 50-W ultrasonic homogenizer. Thereafter, about 10 mL of the dispersion liquid is injected into a laser diffraction scattering type particle size distribution measuring apparatus, and the particle size is measured at 25°C and at a refractive index of 1.3 and an absorption of 0. Then, the particle size at an integrated value of 50% (on a volume basis) in this particle size distribution is designated as the average particle size D50. Regarding the measuring apparatus, for example, Microtrac MT3000 (manufactured by NIKKISO CO., LTD., product name) can be used.

Furthermore, as the aerogel particles, a commercially available product can be used. Examples of a commercially available product of the aerogel particles include ENOVA MT1100 (manufactured by Cabot Corporation) and AeroVa (manufactured by JIOS AEROGEL CORPORATION).

According to the present embodiment, the amount of the aerogel particles is preferably an amount in which the total content of the aerogel particles and the agglomerates in the coating liquid is 70% by volume or more, more preferably 75% by volume or more, and even more preferably 80% by volume or more, based on the total volume of the solid content. Furthermore, the amount of the aerogel particles may be an amount in which the total content of the aerogel particles and the agglomerates in the coating liquid is, for example, 99% by volume or less, may be 95% by volume or less, and may also be 90% by volume or less, based on the total volume of the solid content.

### <Method for producing aerogel particles>

A method for producing aerogel particles is not particularly limited; however, aerogel particles can be produced by, for example, the following method.

The aerogel particles of the present embodiment can be produced by a production method mainly including: a sol production step; a wet gel production step of gelling the sol obtained in the sol production step and then aging the gel to obtain a wet gel; a washing and solvent substitution step of subjecting the wet gel obtained in the wet gel production step to washing and (optionally) solvent substitution; a drying step of drying the wet gel that has been subjected to washing and solvent substitution; and a pulverization step of pulverizing the aerogel obtained by drying.

Furthermore, the aerogel particles may also be produced by a production mainly including: a sol production step; a wet gel production step; a wet gel pulverization step of pulverizing a wet gel obtained in the wet gel production step; a washing and solvent substitution step; and a drying step.

The obtained aerogel particles can further have the size made uniform by sieving, classification, or the like. By making the size of the particles uniform, dispersibility can be increased. Incidentally, the term "sol" is a state prior to the occurrence of a gelation reaction, and according to the present embodiment, the term "sol" means a state in which the above-described silicon compound and optionally silica particles are dissolved or dispersed in a solvent. Furthermore, a wet gel means a gel solid in a wet state, which lacks fluidity even though it includes a liquid medium.

### (Sol production step)

The sol production step is a step of mixing a silicon compound and optionally silica particles (a solvent including silica particles may be used), performing a hydrolysis reaction, and then producing a sol. In the present step, an acid catalyst may be further added into the solvent in order to promote the hydrolysis reaction. Furthermore, as described in Japanese Patent No. 5250900, a surfactant, a thermally hydrolysable compound, and the like may be added into the solvent. In addition, for the purpose of suppressing heat ray radiation and the like, components such as carbon graphite, an aluminum compound, a magnesium compound, a silver compound, and a titanium compound may be added into the solvent.

As the solvent, for example, water or a mixed liquid of water and an alcohol can be used. Examples of the alcohol include methanol, ethanol, n-propanol, 2-propanol, n-butanol, 2-butanol, and t-butanol. Among these, from the viewpoint of lowering the interfacial tension with gel walls, examples of an alcohol having low surface tension and a low boiling point include methanol, ethanol, and 2-propanol. These may be used singly or as mixtures of two or more kinds thereof.

For example, when an alcohol is used as the solvent, the amount of the alcohol can be set to 4 to 8 mol with respect to 1 mol of the total amount of the silicon compound group and the polysiloxane compound group, and the amount of the alcohol may also be 4 to 6.5 or may be 4.5 to 6 mol. By adjusting the amount of the alcohol to 4 mol or more, satisfactory compatibility is more likely to be obtained, and when the amount is adjusted to 8 mol or less, shrinkage of the gel is more easily suppressed.

Examples of the acid catalyst include inorganic acids such as hydrofluoric acid, hydrochloric acid, nitric acid, sulfuric acid, sulfurous acid, phosphoric acid, phosphorous acid, hypophosphorous acid, bromic acid, chloric acid, chlorous acid, and hypochlorous acid; acidic phosphoric acid salts such as acidic aluminum phosphate, acidic magnesium phosphate, and acidic zinc phosphate; and organic carboxylic acids such as acetic acid, formic acid, propionic acid, oxalic acid, malonic acid, succinic acid, citric acid, malic acid, adipic acid, and azelaic acid. Among these, an acid catalyst that further improves the water resistance of the obtained aerogel may be an organic carboxylic acid. This organic carboxylic acid may be acetic acid and may also be formic acid, propionic acid, oxalic acid, malonic acid, or the like. These may be used singly, or two or more kinds thereof may be used as mixtures.

By using an acid catalyst, a hydrolysis reaction of the silicon compound is promoted, and a sol can be obtained in a shorter period of time.

The amount of addition of the acid catalyst can be set to 0.001 to 0.1 parts by mass with respect to 100 parts by mass of the total amount of the polysiloxane compound group and the silicon compound group.

Regarding the surfactant, a nonionic surfactant, an ionic surfactant, and the like can be used. These may be used singly or as a mixture of two or more kinds thereof.

As the nonionic surfactant, for example, a compound including a hydrophilic part such as polyoxyethylene and a hydrophobic part composed mainly of an alkyl group, a compound including a hydrophilic part such as polyoxypropylene, and the like can be used. Examples of the compound including a hydrophilic part such as polyoxyethylene and a hydrophobic part composed mainly of an alkyl group include polyoxyethylene nonyl phenyl ether, polyoxyethylene octyl phenyl ether, and a polyoxyethylene alkyl ether. Examples of the compound including a hydrophilic part such as polyoxypropylene include a polyoxypropylene alkyl ether and a block copolymer of polyoxyethylene and polyoxypropylene.

Examples of the ionic surfactant include a cationic surfactant, an anionic surfactant, and a zwitterionic surfactant. Examples of the cationic surfactant include cetyltrimethylammonium bromide and cetyltrimethylammonium chloride, and examples of the anionic surfactant include sodium dodecyl sulfonate. Furthermore, examples of the zwitterionic surfactant include an amino acid-based surfactant, a betaine-based surfactant, and an amine oxide-based surfactant. Examples of the amino acid-based surfactant include acylglutamic acid. Examples of the betaine-based surfactant include lauryl dimethylamino acetic acid betaine and stearyl dimethylamino acetic acid betaine. Examples of the amine oxide-based surfactant include lauryl dimethyl amine oxide.

It is speculated that these surfactants act to reduce the difference in chemical affinity between the solvent in the reaction system and the growing siloxane polymer during the wet gel production step that will be described below and suppress phase separation.

The amount of addition of the surfactant may vary depending on the type of the surfactant or the type and amount of the silicon compound; however, for example, the amount of addition can be set to 1 to 100 parts by mass with respect to 100 parts by mass of the total amount of the polysiloxane compound group and the silicon compound group. Incidentally, the same amount of addition may be 5 to 60 parts by mass.

A thermally hydrolysable compound is believed to generate a base catalyst by thermal hydrolysis, making the reaction solution basic, and promote a sol-gel reaction in the wet gel production step that will be described below. Therefore, this thermally hydrolysable compound is not particularly limited as long as it is a compound capable of making the reaction solution basic after hydrolysis, and examples include urea; acid amides such as formamide, N-methylformamide, N,N-dimethylformamide, acetamide, N-methylacetamide, and N,N-dimethylacetamide; and cyclic nitrogen compounds such as hexamethylenetetramine. Among these, urea in particular is likely to provide the above-described promoting effect.

The amount of addition of the thermally hydrolysable compound is not particularly limited as long as it is an amount that can sufficiently promote a sol-gel reaction in the wet gel production step that will be described below. For example, when urea is used as the thermally hydrolysable compound, the amount of addition thereof can be set to 1 to 200 parts by mass with respect to 100 parts by mass of the total amount of the polysiloxane compound group and the silicon compound group. Incidentally, the same amount of addition may be 2 to 150 parts by mass. When the amount of addition is set to 1 part by mass or more, satisfactory reactivity is more easily obtained, and when the amount of addition is set to 200 parts by mass or less, precipitation of crystals and a decrease in the gel density are more easily suppressed.

Hydrolysis of the sol production step may vary depending on the types and amounts of the silicon compound, silica particles, acid catalyst, surfactant, and the like in the mixed liquid; however, for example, hydrolysis may be carried out for 10 minutes to 24 hours in a temperature environment at 20°C to 60°C or may be carried out for 5 minutes to 8 hours in a temperature environment at 50°C to 60°C. As a result, the hydrolysable functional group in the silicon compound is sufficiently hydrolyzed, and a hydrolysis product of the silicon compound is obtained more reliably.

However, in the case of adding a thermally hydrolysable compound into the solvent, the temperature environment of the sol production step may be regulated to a temperature at which hydrolysis of the thermally hydrolysable compound is suppressed and gelation of the sol is suppressed. The temperature in this case may be any temperature as long as it is a temperature at which hydrolysis of the thermally hydrolysable compound can be suppressed. For example, when urea is used as the thermally hydrolysable compound, the temperature environment of the sol production step can be set to 0°C to 40°C or may be 10°C to 30°C.

### (Wet gel production step)

The wet gel production step is a step of gelling the sol obtained in the sol production step and then aging the gel to obtain a wet gel. In the present step, a base catalyst can be used in order to promote gelation.

Examples of the base catalyst include carbonic acid salts such as calcium carbonate, potassium carbonate, sodium carbonate, barium carbonate, magnesium carbonate, lithium carbonate, ammonium carbonate, copper(II) carbonate, iron(II) carbonate, and silver(I) carbonate; hydrogen carbonic acid salts such as calcium hydrogen carbonate, potassium hydrogen carbonate, sodium hydrogen carbonate, and ammonium hydrogen carbonate; alkali metal hydroxides such as lithium hydroxide, sodium hydroxide, potassium hydroxide, and cesium hydroxide; ammonium compounds such as ammonium hydroxide, ammonium fluoride, ammonium chloride, and ammonium bromide; basic sodium phosphate salts such as sodium metaphosphate, sodium pyrophosphate, and sodium polyphosphate; aliphatic amines such as allylamine, diallylamine, triallylamine, isopropylamine, diisopropylamine, ethylamine, diethylamine, triethylamine, 2-ethylhexylamine, 3-ethoxypropylamine, diisobutylamine, 3 -(diethylamino)propylamine, di-2-ethylhexylamine, 3-(dibutylamino)propylamine, tetramethylethylenediamine, t-butylamine, sec-butylamine, propylamine, 3-(methylamino)propylamine, 3-(dimethylamino)propylamine, 3-methoxyamine, dimethylethanolamine, methyldiethanolamine, diethanolamine, and triethanolamine; and nitrogen-containing heterocyclic compounds such as morpholine, N-methylmorpholine, 2-methylmorpholine, piperazine and derivatives thereof, piperidine and derivatives thereof, and imidazole and derivatives thereof. Among these, ammonium hydroxide (aqueous ammonia) is excellent from the viewpoint that since ammonium hydroxide is highly volatile and is less likely to remain in the aerogel particles after drying, ammonium hydroxide is less likely to impair water resistance, and from the viewpoint of economic efficiency. The above-described base catalysts may be used singly or as mixtures of two or more kinds thereof.

By using a base catalyst, a dehydration condensation reaction or a dealcoholization condensation reaction of the silicon compound and the silica particles in the sol can be promoted, and gelation of the sol can be achieved in a shorter period of time. Furthermore, as a result, a wet gel having higher strength (rigidity) can be obtained. Particularly, since ammonia is highly volatile and is less likely to remain in the aerogel particles, aerogel particles having more excellent water resistance can be obtained by using ammonia as the base catalyst.

The amount of addition of the base catalyst can be set to 0.5 to 5 parts by mass, or may be 1 to 4 parts by mass, with respect to 100 parts by mass of the total amount of the polysiloxane compound group and the silicon compound group. By setting the amount of addition to 0.5 parts by mass or more, gelation can be achieved in a shorter period of time, and by setting the amount of addition to 5 parts by mass or less, deterioration of the water resistance can be further suppressed.

Gelation of the sol in the wet gel production step may be carried out in a sealed container so that the solvent and the base catalyst are not volatilized. The gelation temperature can be set to 30°C to 90°C or may be 40°C to 80°C. By setting the gelation temperature to 30°C or higher, gelation can be achieved in a shorter period of time, and a wet gel having higher strength (rigidity) can be obtained. Furthermore, by setting the gelation temperature to 90°C or lower, volatilization of the solvent (alcohol in particular) is easily suppressed, and therefore, gelation can be achieved while suppressing volumetric shrinkage.

Aging in the wet gel production step may be carried out in a sealed container so that the solvent and the base catalyst are not volatilized. Due to aging, bonding of the components constituting the wet gel is strengthened, and as a result, a wet gel having sufficient strength (rigidity) for suppressing shrinkage during drying can be obtained. The aging temperature can be set to 30°C to 90°C, or may be 40°C to 80°C. By setting the aging temperature to 30°C or higher, a wet gel having higher strength (rigidity) can be obtained, and by setting the aging temperature to 90°C or lower, volatilization of the solvent (particularly alcohol) is easily suppressed so that gelation can be achieved while suppressing volumetric shrinkage.

Incidentally, since it may be often difficult to determine the end point of gelation of the sol, gelation of the sol and subsequent aging may be carried out in a continuous series of operations.

The gelation time and the aging time can be appropriately set by the gelation temperature and the aging temperature. When silica particles are included in the sol, particularly the gelation time can be shortened as compared with a case where silica particles are not included. The reason for this is speculated to be that silanol groups or reactive groups carried by the silicon compound in the sol form hydrogen bonds or chemical bonds with silanol groups of the silica particles. Incidentally, the gelation time can be set to 10 to 120 minutes or may be 20 to 90 minutes. By setting the gelation time to 10 minutes or longer, a homogeneous wet gel is likely to be obtained, and by setting the gelation time to 120 minutes or shorter, simplification from the washing and solvent substitution step to the drying step, which will be described below, is made possible. Incidentally, the total time of the gelation time and the aging time throughout the steps of gelation and aging can be set to 4 to 480 hours or may be set to 6 to 120 hours. By setting the sum total of the gelation time and the aging time to 4 hours or longer, a wet gel having higher strength (rigidity) can be obtained, and by setting the sum total to 480 hours or shorter, the effect of aging is more easily maintained.

In order to decrease the density of the obtained aerogel particles or to increase the average pore size, the gelation temperature and the aging temperature may be raised in the above-described ranges, or the total time of the gelation time and the aging time may be shortened in the above-described range.

### (Wet gel pulverization step)

When the wet gel pulverization step is carried out, the wet gel obtained in the wet gel production step is pulverized. Pulverization can be performed by, for example, putting the wet gel into a Henschel type mixer or carrying out the wet gel production step in a mixer and operating the mixer under appropriate conditions (speed of rotation and time). Furthermore, more simply, the wet gel pulverization step can be carried out by putting the wet gel into a sealable container or carrying out the wet gel production step in a sealable container, and the sealable container is shaken for a moderate time by using a shaking device such as a shaker. Incidentally, the particle size of the wet gel can be adjusted as necessary, by using a jet mill, a roller mill, a bead mill, or the like.

### (Washing and solvent substitution step)

The washing and solvent substitution step is a step including a step of washing a wet gel obtained by the wet gel production step or wet gel pulverization step (washing step) and a step of substituting the washing liquid in the wet gel with a solvent appropriate for drying conditions (drying step that will be described below) (solvent substitution step). The washing and solvent substitution step can be carried out even in an embodiment in which only the solvent substitution step is carried out without carrying out a step of washing the wet gel; however, from the viewpoint of reducing impurities such as unreacted materials and byproducts in the wet gel and enabling the production of aerogel particles with higher purity, the wet gel may be washed.

In the washing step, the wet gel obtained by the wet gel production step or wet gel pulverization step is washed. This washing can be repeatedly performed by, for example, using water or an organic solvent. At this time, the washing efficiency can be improved by heating.

As the organic solvent, various organic solvents such as methanol, ethanol, 1-propanol, 2-propanol, 1-butanol, acetone, methyl ethyl ketone, 1,2-dimethoxyethane, acetonitrile, hexane, toluene, diethyl ether, chloroform, ethyl acetate, tetrahydrofuran, methylene chloride, N,N-dimethylformamide, dimethyl sulfoxide, acetic acid, and formic acid can be used. The above-described organic solvents may be used singly or as mixtures of two or more kinds thereof.

In the solvent substitution step that will be described below, a solvent with low surface tension can be used in order to suppress shrinkage of the gel due to drying. However, a solvent with low surface tension generally has very low mutual solubility with water. Therefore, when a solvent with low surface tension is used in the solvent substitution step, as the organic solvent used in the washing step, a hydrophilic organic solvent having high mutual solubility for both water and the solvent with low surface tension may be mentioned. Incidentally, the hydrophilic organic solvent used in the washing step can accomplish the role of preliminary substitution for the solvent substitution step. Among the above-described organic solvents, examples of a hydrophilic organic solvent include methanol, ethanol, 2-propanol, acetone, and methyl ethyl ketone. Incidentally, methanol, ethanol, methyl ethyl ketone, and the like are excellent in terms of economic efficiency.

The amount of water or the organic solvent used in the washing step can be set to an amount that can sufficiently substitute the solvent in the wet gel and wash the wet gel. This amount can be set to an amount 3 to 10 times the volume of the wet gel. Washing can be repeated until the water content percentage in the wet gel after washing reaches 10% by mass or less with respect to the mass of silica.

The temperature environment in the washing step can be set to a temperature equal to or lower than the boiling point of the solvent used for washing, and for example, in the case of using methanol, the temperature environment can be warmed to about 30°C to 60°C.

In the solvent substitution step, the solvent of the washed wet gel is substituted with a predetermined solvent for substitution in order to suppress shrinkage of the aerogel during the drying step. At this time, the substitution efficiency can be improved by warming. As the solvent for substitution, specifically, when drying is performed at a temperature lower than the critical point of the solvent used for drying at atmospheric pressure in the drying step, a solvent with low surface tension that will be described below may be mentioned. On the other hand, in the case of performing supercritical drying, examples of the solvent for substitution include ethanol, methanol, 2-propanol, dichlorodifluoromethane, carbon dioxide, and a solvent obtained by mixing two or more kinds of these.

Regarding the solvent with low surface tension, a solvent having a surface tension at 20°C of 30 mN/m or less may be mentioned. Incidentally, this surface tension may be 25 mN/m or less or may be 20 mN/m or less. Examples of the solvent with low surface tension include aliphatic hydrocarbons such as pentane (15.5), hexane (18.4), heptane (20.2), octane (21.7), 2-methylpentane (17.4), 3-methylpentane (18.1), 2-methylhexane (19.3), cyclopentane (22.6), cyclohexane (25.2), and 1-pentene (16.0); aromatic hydrocarbons such as benzene (28.9), toluene (28.5), m-xylene (28.7), and p-xylene (28.3); halogenated hydrocarbons such as dichloromethane (27.9), chloroform (27.2), tetrachlorocarbon (26.9), 1-chloropropane (21.8), and 2-chloropropane (18.1); ethers such as ethyl ether (17.1), propyl ether (20.5), isopropyl ether (17.7), butyl ethyl ether (20.8), and 1,2-dimethoxyethane (24.6); ketones such as acetone (23.3), methyl ethyl ketone (24.6), methyl propyl ketone (25.1), and diethyl ketone (25.3); and esters such as methyl acetate (24.8), ethyl acetate (23.8), propyl acetate (24.3), isopropyl acetate (21.2), isobutyl acetate (23.7), and ethyl butyrate (24.6) (numbers within the parentheses indicate surface tension at 20°C, and the unit is [mN/m]). Among these, aliphatic hydrocarbons (hexane, heptane, and the like) have low surface tension and have excellent working environment characteristics. Furthermore, among these, by using a hydrophilic organic solvent such as acetone, methyl ethyl ketone, or 1,2-dimethoxyethane, the solvent can also be used as the organic solvent of the washing step. Among these, from the viewpoint that drying is even easier in the drying step that will be described below, a solvent having a boiling point at normal pressure of 100°C or lower may also be used. The above-described solvents may be used singly or as mixtures of two or more kinds thereof.

The amount of the solvent used in the solvent substitution step can be set to an amount that can sufficiently substitute the solvent in the wet gel after washing. This amount can be set to an amount 3 to 10 times the volume of the wet gel.

The temperature environment for the solvent substitution step can be set to a temperature equal to or lower than the boiling point of the solvent used for substitution, and for example, in the case of using heptane, the temperature environment can be warmed to about 30°C to 60°C.

When silica particles are included in the gel, the solvent substitution step is not essential. The presumed mechanism is as follows. That is, as the silica particles function as supports for a three-dimensional network-shaped skeleton, the skeleton is supported, and shrinkage of the gel in the drying step is suppressed. Therefore, it is considered that the gel can be directly subjected to the drying step without substituting the solvent used for washing. By using silica particles in this manner, simplification from the washing and solvent substitution step to the drying step is made possible.

### (Drying step)

In the drying step, the wet gel that has been subjected to washing and (optionally) solvent substitution as described above is dried. As a result, an aerogel (aerogel blocks or aerogel particles) can be obtained. That is, an aerogel formed by drying the wet gel produced from the above-described sol can be obtained.

The technique for drying is not particularly limited, and normal pressure drying, supercritical drying, or freeze-drying, which are all known, can be used. Among these, from the viewpoint that an aerogel with low density is easily produced, normal pressure drying or supercritical drying can be used. Furthermore, from the viewpoint that production can be achieved at low cost, normal pressure drying can be used. Incidentally, in the present embodiment, normal pressure means 0.1 MPa (atmospheric pressure).

The aerogel can be obtained by drying a wet gel that has been subjected to washing and (optionally) solvent substitution, at a temperature lower than the critical point of the solvent used for drying and at atmospheric pressure. The drying temperature may vary depending on the type of the substituted solvent (when solvent substitution is not performed, the solvent used for washing); however, in view of the fact that drying at high temperatures in particular may accelerate the evaporation rate of the solvent and may cause large cracks in the gel, the drying temperature can be set to 20°C to 150°C. Incidentally, this drying temperature may be 60°C to 120°C. Furthermore, the drying time may vary depending on the volume of the wet gel and the drying temperature; however, the drying time can be set to 4 to 120 hours. Incidentally, it should be noted that speeding up drying by applying a pressure lower than the critical point to the extent that does not impede productivity, is also included in the normal pressure drying.

The aerogel can also be obtained by supercritical drying of the wet gel that has been subjected to washing and (optionally) solvent substitution. Supercritical drying can be performed by any known technique.

Regarding a method of performing supercritical drying, for example, a method of removing the solvent at a temperature and a pressure equal to or higher than the critical point of the solvent included in the wet gel may be mentioned. Alternatively, regarding the method of performing supercritical drying, a method of immersing the wet gel in liquefied carbon dioxide, for example, under the conditions of 20°C to 25°C and about 5 to 20 MPa to substitute the entirety or a portion of the solvent included in the wet gel with carbon dioxide having a lower critical point than the solvent, and then removing carbon dioxide alone or a mixture of carbon dioxide and the solvent, may be mentioned.

An aerogel obtained by such normal pressure drying or supercritical drying may be additionally dried at 105°C to 200°C for about 0.5 to 2 hours at normal pressure. As a result, an aerogel having a low density and small pores is more easily obtained. Additional drying may be carried out at 150°C to 200°C at normal pressure.

### (Pulverization step)

When the wet gel pulverization step is not carried out, aerogel particles are obtained by pulverizing the aerogel (aerogel blocks) obtained by drying. For example, pulverization can be performed by putting the aerogel into a jet mill, a roller mill, a bead mill, a hammer mill, or the like and operating the mill at a moderate speed of rotation for a moderate time.

### <Emulsion>

According to the present embodiment, the emulsion may be a product obtained by emulsifying a binder resin in a liquid medium by using a polymer-based emulsifier.

The liquid medium is preferably a water-based solvent including water. The water-based solvent may include an organic solvent in addition to water. The organic solvent may be one having compatibility with water, and examples include alcohols such as methanol, ethanol, isopropanol, butanol, ethylene glycol, and propylene glycol; ethers such as diethyl ether, tetrahydrofuran, and 1,4-dioxane; ketones such as acetone and methyl ethyl ketone; carboxylic acids such as acetic acid and propionic acid; and nitrogen-containing compounds such as acetonitrile, dimethylformamide, and triethylamine.

The content of the liquid medium in the emulsion is not particularly limited; however, for example, the content may be 20 to 900 parts by mass or may be 50 to 250 parts by mass with respect to 100 parts by mass of the solid content.

The content of the liquid medium in the coating liquid is not particularly limited and may be appropriately changed according to the desired viscosity and the like of the coating liquid. For example, the content of the liquid medium in the coating liquid may be an amount in which the solid content concentration of the coating liquid is in the suitable range that will be described below. Incidentally, the liquid medium in the coating liquid may be only the liquid medium in the emulsion or may include a liquid medium added during mixing or after mixing of the emulsion with the aerogel particles.

The solid content concentration of the coating liquid may be, for example, 10% by mass or more and is preferably 15% by mass or more, and more preferably 20% by mass or more. Furthermore, the solid content concentration of the coating liquid may be, for example, 70% by mass or less and is preferably 60% by mass or less and more preferably 50% by mass or less.

The binder resin may be a resin that can be emulsified in a liquid medium by using a polymer emulsifier. Examples of the binder resin include a urethane resin, an alkyd resin, a silicone resin, an acrylic resin, an olefin resin, a fluororesin, a vinyl acetate resin, a vinyl chloride resin, a polyester, a polyamide, a polyimide, and a copolymer of two or more kinds of monomers forming these resins. Among these, from the viewpoint that the thermal insulation material to be formed has more excellent flexibility, an ethylene-vinyl acetate copolymer, an ethylene-vinyl chloride copolymer, an acrylic resin, and a silicone resin can be suitably used, and from the viewpoint of having excellent film-forming properties at low temperatures, a vinyl acetate resin can be suitably used.

The content of the binder resin in the emulsion is not particularly limited, and for example, the content may be 20% by mass or more or may be 30% by mass or more. Furthermore, the content of the binder resin in the emulsion may be, for example, 80% by mass or less or may be 60% by mass or less.

The content of the binder resin in the coating liquid may be, for example, 30% by volume or less, and the content is preferably 25% by volume or less, and more preferably 20% by volume or less, based on the total volume of the solid content. Furthermore, the content of the binder resin in the coating liquid may be, for example, 1% by volume or more, and the content may be 5% by volume or more or may be 10% by volume or more, based on the total volume of the solid content.

The polymer-based emulsifier may be an emulsifier capable of emulsifying the binder resin in the liquid medium. Incidentally, the "polymer-based emulsifier" in the present specification indicates an emulsifier formed by polymerization of monomers (and optionally modification of the polymer). The polymer-based emulsifier may have a molecular weight distribution.

The number average molecular weight (Mn) of the polymer-based emulsifier may be, for example, 1000 or more and may be 5000 or more, 8000 or more, 10000 or more, or 20000 or more. Furthermore, the number average molecular weight of the polymer-based emulsifier may be, for example, 1000000 or less, 50000 or less, 200000 or less, 100000 or less, or 50000 or less. Incidentally, the number average molecular weight of the polymer-based emulsifier indicates a value measured by GPC.

Examples of the polymer-based emulsifier include polyvinyl alcohol (PVA) and hydroxyethyl cellulose.

The content of the polymer-based emulsifier in the emulsion may be, for example, 0.001 parts by mass or more with respect to 100 parts by mass of the binder resin, and from the viewpoint of stabilizing the emulsion, the content may be 0.01 parts by mass or more, 0.05 parts by mass or more, or 0.1 parts by mass or more. Furthermore, the content of the polymer-based emulsifier in the emulsion may be, for example, 80 parts by mass or less with respect to 100 parts by mass of the binder resin, and from the viewpoint of viscosity, the content may be 20 parts by mass or less, 10 parts by mass or less, or 5 parts by mass or less.

The content of the polymer-based emulsifier in the coating liquid may be, for example, 0.0001 parts by mass or more with respect to 100 parts by mass of the binder resin, and from the viewpoint of stabilizing the emulsion, the content may be 0.001 parts by mass or more, 0.005 parts by mass or more, or 0.01 parts by mass or more. Furthermore, the content of the polymer-based emulsifier in the coating liquid may be, for example, 80 parts by mass or less with respect to 100 parts by mass of the binder resin, and from the viewpoint of the ease of handling during blending, the content may be 20 parts by mass or less, 10 parts by mass or less, or 5 parts by mass or less.

The method for producing the emulsion is not particularly limited, and for example, a method of synthesizing a binder resin in a liquid medium in the presence of a polymer-based emulsifier may be mentioned.

The emulsion may further contain components other than the above-described components. Examples of the other components include a filler material, a solvent, a pigment, a dye, an antiseptic agent, and an antifoaming agent.

### <Water-soluble polymer>

The coating liquid of the present embodiment may further contain a water-soluble polymer having a hydrophobic group. This water-soluble polymer may have a hydrophobic group and may be water-soluble. The water-soluble polymer may be added during mixing or after mixing of the emulsion and the aerogel particles.

Examples of the hydrophobic group include an alkyl group (preferably, a long-chained alkyl group having 6 to 26 carbon atoms), an ester group, an alkoxy group, and a halogen. Among these, the hydrophobic group is preferably an alkyl group, more preferably a long-chained alkyl group having 8 to 26 carbon atoms, even more preferably a long-chained alkyl group having 10 to 26 carbon atoms, and still more preferably a long-chained alkyl group having 12 to 26 carbon atoms, and a long-chained alkyl group having 15 to 26 carbon atoms is also acceptable.

Examples of the water-soluble polymer include a modified carboxylvinyl polymer, a modified polyether urethane, a cellulose-based resin, polyethylene oxide, polyvinyl alcohol, polyacrylate, polyvinylpyrrolidone, a dextrin-based resin, a chitin-based resin, and a chitosan-based resin.

As the water-soluble polymer, a cellulose-based resin can be suitably used. Examples of the cellulose-based resin include methyl cellulose, carboxymethyl cellulose, hydroxyethyl cellulose, hydroxypropylmethyl cellulose, and modification products obtained by further modifying (for example, hydrophobizing) these.

The cellulose-based resin is preferably a cellulose-based resin having an alkyl group, and more preferably a cellulose-based resin having a long-chained alkyl group having 6 to 26 carbon atoms. According to such a cellulose-based resin, the effects of the present invention are exhibited more remarkably. The number of carbon atoms of the long-chained alkyl group is preferably 8 to 26, more preferably 10 to 26, even more preferably 12 to 26, and still more preferably 15 to 26.

Regarding the cellulose-based resin, for example, a cellulose-based resin having a structural unit represented by the following Formula (A-1) is preferred.

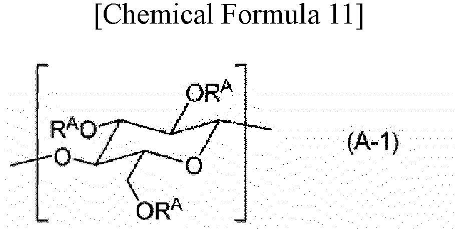

In Formula (A-1), R^{A} represents a hydrogen atom, an alkyl group, a hydroxyalkyl group, or a group represented by -R^{A1}-O-R^{A2} (wherein R^{A1} represents an alkanediyl group or a hydroxyalkanediyl group; and R^{A2} represents an alkyl group). Three R^{A}'s may be identical with or different from each other. However, at least one of the three R^{A}'s is an alkyl group or a group represented by -R^{A1}-O-R^{A2}.

In Formula (A-1), the alkyl group for R^{A} is preferably an alkyl group having 1 to 26 carbon atoms. Furthermore, the alkyl group for R^{A} is more preferably a short-chained alkyl group having 1 to 3 carbon atoms or a long-chained alkyl group having 6 to 26 carbon atoms. The number of carbon atoms of the long-chained alkyl group is preferably 8 to 26, more preferably 10 to 26, even more preferably 12 to 26, and still more preferably 15 to 26.

In Formula (A-1), the hydroxyalkyl group for R^{A} is preferably a hydroxyalkyl group having 1 to 26 carbon atoms, more preferably a hydroxyalkyl group having 1 to 10 carbon atoms, and even more preferably a hydroxyalkyl group having 1 to 5 carbon atoms.

In Formula (A-1), the alkanediyl group for R^{A1} is preferably an alkanediyl group having 1 to 26 carbon atoms, more preferably an alkanediyl group having 1 to 10 carbon atoms, and even more preferably an alkanediyl group having 1 to 5 carbon atoms. Furthermore, the hydroxyalkanediyl group for R^{A1} is preferably a hydroxyalkanediyl group having 1 to 26 carbon atoms, more preferably a hydroxyalkanediyl group having 1 to 10 carbon atoms, and even more preferably a hydroxyalkanediyl group having 1 to 5 carbon atoms.

In Formula (A-1), R^{A2} is preferably an alkyl group having 1 to 26 carbon atoms. Furthermore, the alkyl group for R^{A2} is more preferably a short-chained alkyl group having 1 to 3 carbon atoms or a long-chained alkyl group having 6 to 26 carbon atoms, and even more preferably a long-chained alkyl group. The number of carbon atoms of the long-chained alkyl group is preferably 8 to 26, more preferably 10 to 26, even more preferably 12 to 26, and still more preferably 15 to 26.

In Formula (A-1), it is preferable that at least one of three R^{A}'s is a long-chained alkyl group, or at least one of three R^{A}'s is a group represented by -R^{A1}-O-R^{A2} while R^{A2} is a long-chained alkyl group.

With regard to the cellulose-based resin, the content of the long-chained alkyl group having 6 to 26 carbon atoms is preferably 0.01% to 5% by mass, and more preferably 0.01% to 3% by mass, based on the total amount of the cellulose-based resin.

According to the present embodiment, the content of the water-soluble polymer in the coating liquid may be, for example, 0.01% by volume or more, and the content is preferably 0.1% by volume or more, and more preferably 0.3% by volume or more, based on the total volume of the solid content in the coating liquid. Furthermore, the content of the water-soluble polymer may be, for example, 10% by volume or less, and the content is preferably 5% by volume or less, and more preferably 3% by volume or less, based on the total volume of the solid content in the coating liquid.

### <Other components>

The coating liquid of the present embodiment may further include a thickener, a fibrous substance, a pigment, a leveling agent, and the like as components other than those described above.

Examples of the thickener include fine particles of fumed silica, clay minerals, and the like.

The fibrous substance can exhibit an anchoring function between aerogel particles and can further improve the strength of the coating film by a composite material. The fibrous substance is not particularly limited, and examples include organic fibers and inorganic fibers. Examples of the organic fibers include polyamide-based fibers, polyimide-based fibers, polyvinyl alcohol-based fibers, polyvinylidene chloride-based fibers, polyvinyl chloride-based fibers, polyester-based fibers, polyacrylonitrile-based fibers, polyethylene-based fibers, polypropylene-based fibers, polyurethane-based fibers, phenol-based fibers, polyether ester-based fibers, polylactic acid-based fibers, and polycarbonate-based fibers. Examples of the inorganic fibers include glass fibers, carbon fibers, ceramic fibers, and metal fibers.

### <Method for producing coating liquid>

According to the present embodiment, the coating liquid is produced by a production method including: a preparation step of preparing an emulsion containing a polymer-based emulsifier, a binder resin, and a liquid medium, and aerogel particles; and a mixing step of mixing the emulsion and the aerogel particles prepared in the preparation step to agglomerate at least a portion of the aerogel particles, and obtaining a coating liquid containing agglomerates of the aerogel particles, the polymer-based emulsifier, the binder resin, and the liquid medium.

In the preparation step, components other than the emulsion and the aerogel particles (for example, the above-mentioned <Water-soluble polymer> and <Other components>) may be further prepared.

In the mixing step, the components prepared in the preparation step are each mixed so that the aerogel particles agglomerate. The mixing method may be any method by which the aerogel particles can form agglomerates, and for example, a method of stirring and mixing each of the components prepared in the preparation step may be mentioned.

The stirring speed affects the size of the agglomerates. As the stirring speed is larger, greater shear stress is applied to the coating liquid, and therefore, the size of the agglomerates tends to be decreased. Therefore, from the viewpoint of obtaining agglomerates of a suitable size as will be described below, it is desirable to produce the coating liquid at a low stirring speed.

Furthermore, the viscosity at the time of mixing also affects the size of the agglomerates. Even at the same stirring speed, the shear stress applied to the coating liquid varies depending on the viscosity. When the viscosity is higher, greater shear stress is applied to the coating liquid, and the size of the agglomerates is decreased. On the other hand, when the coating liquid viscosity is lower, even at the same stirring speed, the shear stress applied to the coating liquid is decreased, and the agglomerates become larger. Therefore, a coating liquid having a desired agglomerate size can be produced by adjusting the stirring speed according to the coating liquid viscosity.

Furthermore, the size of the agglomerates can also be changed by additives. Examples of the additives that strongly affect the size of the agglomerates include a surface modifier, a surfactant, and a dispersant.

A surface modifier and a surfactant lower the surface energy between the aerogel particles and the solution. As the surface energy is lower, the force that tends to reduce the interface is weaker, and the size of the agglomerates tends to be reduced. Therefore, addition of a surface modifier and a surfactant lowers the surface energy and reduces the size of the agglomerates.

A dispersant suppresses, by adhering to the particle surfaces, the approach between particles by means of electrostatic or steric repulsive force. Since the dispersant adheres to the surface of the aerogel particles and suppresses the approach between the aerogel particles, the size of the agglomerates is decreased by the addition of the dispersant.

Furthermore, the amount of the liquid medium at the time of mixing also affects the size of the agglomerates. Even when the composition of the finally produced coating liquid is the same, the size of the agglomerates obtained by (i) a method of charging the entire amount of the liquid medium from the beginning of mixing, differs from the size of the agglomerates obtained by (ii) a method of mixing a small amount of the liquid medium at the beginning of mixing and adding the liquid medium thereafter. In the method (ii), the initial coating liquid viscosity becomes higher as compared to the method (i), and when the above-mentioned additives are added, the concentration of the additives is also increased. For this reason, the method (ii) tends to reduce the size of the agglomerates as compared with the method (i). Agglomerates having a desired size can be formed by implementing these methods in accordance with the conditions such as the coating liquid composition and the mixing device (stirring device).

The agglomerates are such that as the size is larger, the contact interface between the aerogel and the resin component becomes smaller, and infiltration of the resin component into the pores of the aerogel is more easily suppressed. From this viewpoint, in the present embodiment, it is preferable that agglomerates having a diameter of 20 µm or more are formed, it is more preferable that agglomerates having a diameter of 40 µm or more are formed, and it is even more preferable that agglomerates having a diameter of 50 µm or more are formed. On the other hand, from the viewpoint of avoiding a decrease in the film strength due to continuous disposition of relatively brittle aerogel, the diameter of the agglomerates is preferably 400 µm or less, and a diameter of 300 µm or less is more preferred.

In the present embodiment, it is preferable that the average diameter of the agglomerates is 2 or more times, more preferably 4 or more times, and even more preferably 8 or more times, the average diameter of the aerogel particles prepared in the preparation step. As a result, the contact interface between the aerogel and the resin component becomes smaller, and infiltration of the resin component into the pores of the aerogel is more easily suppressed. Furthermore, the average diameter of the agglomerates is preferably 40 or less times, more preferably 30 or less times, and even more preferably 20 or less times, the average diameter of the aerogel particles prepared in the preparation step. As a result, a decrease in the film strength due to continuous disposition of relatively brittle aerogel is suppressed, and higher film strength is likely to be obtained.

Incidentally, in the present specification, the average diameter of the agglomerates indicates a value measured by the following method.

### [Method for measuring average diameter of agglomerates in coating liquid]

About 20 g of a coating liquid is taken in a 100-mL plastic cup, and 2 g of water is added at each time while stirring the coating liquid by using a spatula, so that the coating liquid is diluted while being gradually blended. The diluted sample is placed on a glass plate, and a microphotograph of the sample is obtained by using an optical microscope (manufactured by Olympus Corporation, product No.: BX51). The obtained microphotograph is analyzed by using image editing software, ImageJ, and the diameters of a plurality of agglomerates within the microphotograph are determined. The average value of the obtained values is designated as the average diameter of the agglomerates.

Furthermore, in the present specification, the average diameter of the aerogel particles has the same meaning as the above-mentioned average particle size D50 of the aerogel particles.

In the present embodiment, when a diluted solution obtained by diluting the coating liquid is observed by using an optical microscope, among the area occupied by aerogel particles and agglomerates within the visual field of observation, the area occupied by agglomerates having a diameter of 20 µm or more (more preferably, agglomerates having a diameter of 50 µm or more) is preferably 50% or more, more preferably 60% or more, and even more preferably 70% or more, or the area may be 100%.

Incidentally, in the present specification, the diluted solution obtained by diluting the coating liquid and the method for observing the diluted solution may be similar to a sample prepared by the above-mentioned [Method for measuring average diameter of agglomerates in coating liquid] and a method for observing the sample. Furthermore, the "area ... within the visual field of observation" can be determined by analyzing a microphotograph by using image editing software, ImageJ.

### <Method for producing thermal insulation material>

According to the present embodiment, the thermal insulation material is produced by a production method including a coating step of applying the above-described coating liquid on a support to obtain a coating film; and a removal step of removing at least a portion of the liquid medium from the coating film to obtain a thermal insulation material. According to this production method, since agglomerates of aerogel particles are formed in the coating liquid, and infiltration of the resin into the aerogel pores is sufficiently suppressed, a thermal insulation material having high thermal insulation properties and high film-forming properties is obtained.

The support on which the coating liquid is applied is not particularly limited. The support may be peeled off from the thermal insulation material after the thermal insulation material is produced, or may be used without being peeled off from the thermal insulation material. The support may be, for example, an object of application of the thermal insulation material. The material constituting the support is not particularly limited and may be, for example, a metal, a ceramic, glass, a resin, or a composite material of these. Furthermore, the form of the support may be appropriately selected according to the purpose of use, material, and the like and may be, for example, a block shape, a sheet shape, a powder shape, or a fibrous shape.

The method of applying the coating liquid is not particularly limited, and examples include dip coating, spray coating, spin coating, and roll coating.

The method of applying the coating liquid may be a coating method in which the pressure applied to the coating liquid is 1.5 MPa or less. According to such a coating method, crushing of agglomerates in the coating liquid due to the load at the time of application is suppressed. For example, coating methods such as roller coating, trowel coating, and air spraying are preferable because the pressure applied to the coating liquid is easily reduced.

Furthermore, in the present embodiment, due to the use of a polymer-based emulsifier, the binder resin in the emulsion is covered with a polymer-based emulsifier, and therefore, the fine particles of the binder resin and the agglomerates of the aerogel particles are less likely to come into contact, it is difficult for the binder resin to penetrate into the gaps within the agglomerates of the aerogel particles, while the agglomerates of the aerogel particles are less likely to be disintegrated. For this reason, in the present embodiment, even when pressure is applied to a certain extent during application of the coating liquid, the agglomerates of the aerogel particles are likely to be maintained without being disintegrated. Therefore, in the present embodiment, as the method of applying the coating liquid, a coating method in which the pressure applied to the coating liquid is more than 1.5 MPa can also be suitably used. Regarding such a coating method, for example, application using an airless spray, a die coater, a lip coater, or the like may be mentioned.

In the removal step, by removing at least a portion of the liquid medium from the coating film, a thermal insulation material formed from a composite material containing agglomerates of aerogel particles, a binder resin, and a polymer-based emulsifier is formed.

The method of removing the liquid medium from the coating film is not particularly limited, and examples include methods of performing a heating (for example, 40°C to 150°C) treatment, a pressure reduction (for example, 10000 Pa or less) treatment, or both of those treatments.

The thickness of the thermal insulation material is not particularly limited, and for example, the thickness may be 0.01 to 30 mm or may be 0.1 to 20 mm.

The thermal insulation material has pores attributable to the aerogel particles. From the viewpoint of obtaining higher thermal insulation properties, the pore volume of the thermal insulation material is preferably 0.15 cm³/g or more, more preferably 0.20 cm³/g or more, and even more preferably 0.60 cm³/g or more. The upper limit of the pore volume of the thermal insulation material is not particularly limited. The pore volume of the thermal insulation material may be, for example, 5.0 cm³/g or less.

The thermal conductivity of the thermal insulation material is, for example, 0.05 W/(m·K) or less, preferably 0.04 W/(m·K) or less, and more preferably 0.035 W/(m·K) or less. The lower limit of the thermal conductivity of the thermal insulation material is not particularly limited. The thermal conductivity of the thermal insulation material may be, for example, 0.01 W/(m·K) or more.

A thermal insulation material produced by the production method of the present embodiment has excellent thermal insulation properties, heat resistance, flame retardancy, and the like, all of which originate from the aerogel. For this reason, this thermal insulation material can be applied to use applications as thermal insulation materials for cryogenic containers, the field of space, the field of construction, the field of automobiles, the field of household electric appliances, the field of semiconductors, industrial facilities, and the like. Incidentally, in addition to the use applications as a thermal insulation material, this thermal insulation material can also be utilized as a water repellent material, a sound absorbing material, a vibration damping material, a catalyst supporting material, and the like.

Thus, suitable embodiments of the present invention have been described; however, the present invention is not intended to be limited to the above-described embodiments.

### Examples

Hereinafter, the present invention will be described in more detail by way of Examples; however, the present invention is not intended to be limited to these Examples.

### (Example 1)

In a 500-mL separable flask, 6 parts by mass of SANGELOSE 90L (manufactured by Daido Chemical Corporation) as a water-soluble polymer, 46 parts by mass of isopropyl alcohol (manufactured by FUJIFILM Wako Pure Chemical Corporation, reagent), and 840 parts by mass of hot water were taken, and the mixture was stirred at 200 rpm for 1 minute using a mechanical stirrer to obtain a dispersion liquid. Subsequently, while cooling the flask in an ice water bath, the mixture was stirred at 200 rpm by using a mechanical stirrer to dissolve SANGELOSE 90L, and a pregel, which was an aqueous solution of SANGELOSE 90L, was obtained. 892 parts by mass of the pregel and 1000 parts by mass of a vinyl acetate emulsion were taken in a planetary mixer (manufactured by PRIMIX Corporation, 2P-1 model), and the mixture was stirred at 100 rpm. Subsequently, 100 parts by mass of aerogel particles (manufactured by Cabot Corporation, product name: ENOVA MT1100, particle diameter 2 to 24 µm, average particle size (D50) 10 µm) were added thereto, and then the mixture was stirred at 50 rpm to obtain a coating liquid. Incidentally, the vinyl acetate emulsion was produced by using polyvinyl alcohol (degree of polymerization 1700) as a polymer-based emulsifier, in the same manner as in Example 1 of Japanese Examined Patent Publication No. H6-18966. In the coating liquid, the content of the aerogel particles was 74.7% by volume, the content of the water-soluble polymer was 0.4% by volume, and the content of the vinyl acetate resin was 24.9% by volume, based on the total volume of the solid content.

### (Example 2)

A coating liquid was obtained in the same manner as in Example 1, except that the vinyl acetate emulsion was changed to an ethylene-vinyl acetate copolymer emulsion (manufactured by Sumika Chemtex Company, Limited, product name: SUMIKAFLEX 400HQ) produced by using as a polyvinyl alcohol-based emulsifier. Incidentally, in the coating liquid, the content of the aerogel particles was 72.9% by volume, the content of the water-soluble polymer was 0.4% by volume, and the content of the ethylene-vinyl acetate copolymer resin was 26.7% by volume, based on the total volume of the solid content.

### (Example 3)

A coating liquid was obtained in the same manner as in Example 1, except that the vinyl acetate emulsion was changed to an ethylene-vinyl acetate-vinyl chloride copolymer emulsion (manufactured by Sumika Chemtex Company, Limited, product name: SUMIKAFLEX 801HQ) produced by using a polyvinyl alcohol-based emulsifier. Incidentally, in the coating liquid, the content of the aerogel particles was 74.7% by volume, the content of the water-soluble polymer was 0.4% by volume, and the content of the ethylene-vinyl acetate-vinyl chloride copolymer resin was 24.9% by volume, based on the total volume of the solid content.

### (Comparative Example 1)

A coating liquid was obtained in the same manner as in Example 1, except that the vinyl acetate emulsion was changed to an acrylic silicone emulsion produced by using a radical polymerizable emulsifier (manufactured by ADEKA Corporation, product name: ADEKA REASOAP SE-10N) in the same manner as in Example 1 of Japanese Unexamined Patent Publication No. H11-80486. Incidentally, in the coating liquid, the content of the aerogel particles was 76.6% by volume, the content of the water-soluble polymer was 0.4% by volume, and the content of the acrylic silicone resin was 23.0% by volume, based on the total volume of the solid content.

### <Evaluation of pressure resistance of thermal insulation material>

Each of the coating liquids obtained in the Examples was applied on a carbon steel plate having a size of 70 mm × 150 mm and coated with a commercially available antirust paint, by using an airless spray (manufactured by Graco, Inc. Ultra cordless airless handheld, tip nozzle FFLP514, pressure 10 MPa) such that the film thickness after drying was 1 mm. The coating liquid was left to stand at room temperature of 23°C for 12 hours to remove the liquid medium from the coating liquid, and a thermal insulation material was obtained. With regard to the obtained thermal insulation materials, the state of cracking was evaluated by rating a thermal insulation material having no cracks in the whole material as A; a thermal insulation material having cracks in some parts as B; and a thermal insulation material having cracks in the whole material as C.

### <Evaluation of pore volume of thermal insulation material>

A thermal insulation material was produced by the same method as that in the above-described section <Evaluation of cracking in thermal insulation materials 100 mg of a produced thermal insulation material was collected, and the pore volume was calculated by using a high-sensitivity gas adsorption analyzer (manufactured by Quantachrome Instruments, AutoSorb iQ).

### <Evaluation of thermal conductivity of thermal insulation material>

A frame having a size of 200 mm in length and width and 3 mm in thickness produced from a fluororesin was prepared on an aluminum foil (manufactured by UACJ Corporation, product name: My Foil Thick Type 50, thickness: 50 µm), and a coating liquid was applied within the frame by using a spatula. The coating liquid was left to stand at room temperature of 23°C for 12 hours to remove the liquid medium from the coating liquid, and a thermal insulation material was obtained. The thermal conductivity of the obtained thermal insulation material was measured by a steady state method by using a thermal conductivity measuring device "HFM-446" (manufactured by NETZSCH Japan K.K., product name).

The results of the above-described evaluations are shown in Table 1.

**[Table 1]**

| | Example 1 | Example 2 | Example 3 | Comparative Example 1 |
|---|---|---|---|---|
| Average diameter of agglomerates (µm) | 70 | 95 | 52 | 60 |
| Coating pressure (MPa) | 10 | 10 | 10 | 10 |
| Evaluation of cracking | A | A | B | C |
| Pore volume (cm³/g) | 0.45 | 1.55 | 0.98 | 0.08 |
| Thermal conductivity (W/(m·K)) | 0.036 | 0.037 | 0.036 | 0.070 |

## Claims

1. A method for producing a coating liquid, the method comprising:
a preparation step of preparing an emulsion containing a polymer-based emulsifier, a binder resin, and a liquid medium, and aerogel particles; and
a mixing step of mixing the emulsion and the aerogel particles prepared in the preparation step to agglomerate at least a portion of the aerogel particles, and obtaining a coating liquid containing agglomerates of the aerogel particles, the polymer-based emulsifier, the binder resin, and the liquid medium.

2. The production method according to claim 1, wherein an average diameter of the agglomerates is 2 to 40 times an average diameter of the aerogel particles prepared in the preparation step.

3. The production method according to claim 1 or 2, wherein when a diluted solution obtained by diluting the coating liquid is observed by using an optical microscope, in an area occupied by the aerogel particles and the agglomerates within a visual field of observation, an area occupied by the agglomerates having a diameter of 20 µm or more is 50% or more.

4. The production method according to any one of claims 1 to 3, wherein a total content of the aerogel particles and the agglomerates in the coating liquid is 70% by volume or more based on a total volume of solid content.

5. The production method according to any one of claims 1 to 4, wherein the mixing step is a step of further mixing a water-soluble polymer having a hydrophobic group, and
the coating liquid further contains the water-soluble polymer.

6. A method for producing a thermal insulation material, the method comprising:
a coating step of applying a coating liquid produced by the production method according to any one of claims 1 to 5 on a support to obtain a coating film; and
a removal step of removing at least a portion of the liquid medium from the coating film to obtain a thermal insulation material.

7. The production method according to claim 6, wherein the thermal insulation material has a pore volume of 0.15 cm³/g or more.

8. The production method according to claim 6 or 7, wherein the coating step is a step of applying the coating liquid by a coating method in which a pressure applied to the coating liquid is more than 1.5 MPa.

9. A coating liquid comprising agglomerates of aerogel particles, a polymer-based emulsifier, a binder resin, and a liquid medium,
wherein when a diluted solution obtained by diluting the coating liquid is observed by using an optical microscope, in an area occupied by the aerogel particles and the agglomerates within a visual field of observation, an area occupied by the agglomerates having a diameter of 20 µm or more is 50% or more.
